Europäisches Patentamt

European Patent Office

Office européen des brevets

(19)

(11) Numéro de publication : **0 201 021**
**B1**

(12) **FASCICULE DE BREVET EUROPÉEN**

(45) Date de publication du fascicule du brevet :
28.03.90

(51) Int. Cl.⁵ : **H 02 K 21/14**

(21) Numéro de dépôt : **86105846.9**

(22) Date de dépôt : **28.04.86**

(54) **Moteur électrique synchrone à rotor en forme de disque.**

(30) Priorité : **10.05.85 CH 1999/85**

(43) Date de publication de la demande :
**12.11.86 Bulletin 86/46**

(45) Mention de la délivrance du brevet :
**28.03.90 Bulletin 90/13**

(84) Etats contractants désignés :
**DE FR GB NL**

(56) Documents cités :
**WO—A—83 /020 42**
**FR—A— 1 271 765**
**FR—A— 2 544 138**
**GB—A— 2 067 025**

(73) Titulaire : **PORTESCAP**
**165 Rue Numa-Droz**
**CH-2300 La Chaux-de-Fonds (CH)**

(72) Inventeur : **Oudet, Claude**
**12, rue Capitane-Arrachart**
**F-25000 Besançon (FR)**

(74) Mandataire : **Hranitzky, Wilhelm Max**
**c/o WILLIAM BLANC & CIE 9, rue du Valais**
**CH-1202 Genève (CH)**

EP 0 201 021 B1

## Description

La présente invention concerne un moteur électrique synchrone selon le préambule de la revendication 1.

Un tel moteur est décrit, par exemple, dans le brevet suisse No. 637 508. La conception originale de ce moteur est adaptée à des moteurs de relativement petite taille et d'une puissance nettement inférieure à 1 kilowatt. Pour des moteurs de taille plus grande, il s'est avéré que la structure prévue à l'origine n'offre pas la relation optimale entre le couple produit et l'encombrement du moteur, notamment en ce qui concerne sa dimension radiale.

La présente invention a pour but de fournir un moteur permettant d'obtenir un couple élevé et un grand nombre de pas par tour pour une dimension radiale minimale du moteur.

A cet effet, le moteur selon l'invention comporte la disposition décrite dans la partie caractéristique de la revendication 1.

Des formes d'exécution particulières du moteur selon l'invention sont décrites dans les revendications 2 à 11.

D'autres caractéristiques et avantages de l'invention ressortiront de la description donnée ci-après de différentes formes d'exécution, avec référence au dessin annexé, dans lequel :

La figure 1 est une vue en coupe axiale d'une première forme d'exécution du moteur selon l'invention,

la figure 2 est une vue en coupe selon la ligne II-II de la figure 1, à une échelle plus grande,

la figure 3 est une vue en coupe partielle, similaire à une partie de la figure 2, d'une première variante d'exécution du moteur de la figure 1,

la figure 4 est une vue en perspective d'une pièce en forme de « U » d'un circuit magnétique élémentaire utilisé dans le moteur de la figure 3,

la figure 5 est une vue en coupe partielle, similaire à celle de la figure 3, d'une deuxième variante d'exécution du moteur de la figure 1,

la figure 6 est une vue en perspective, similaire à celle de la figure 4, d'une pièce en forme de « U » utilisée dans la variante d'exécution du moteur selon la figure 5,

la figure 7 est une vue en coupe partielle, similaire à une partie de la figure 1, montrant une autre forme d'exécution d'un circuit magnétique élémentaire,

la figure 8 est une vue en coupe partielle, similaire à celle de la figure 1, correspondant à une autre forme de réalisation du moteur, et

la figure 9 est une vue en coupe similaire à celle de la figure 1, montrant une forme d'exécution alternative du moteur de la figure 1.

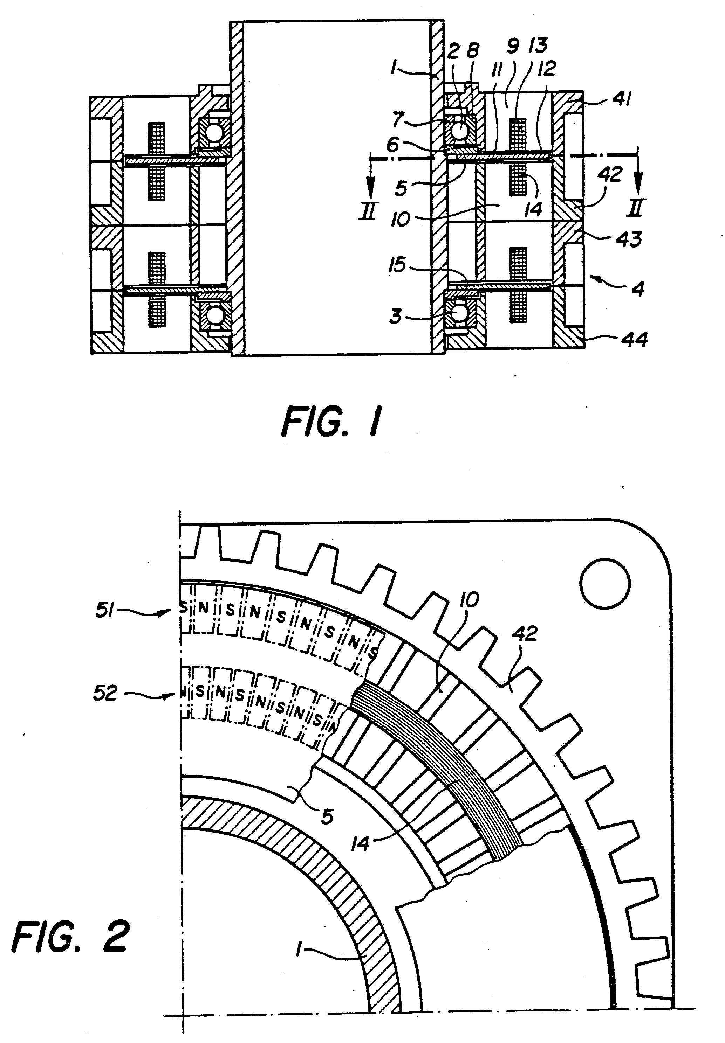

Le moteur représenté aux figures 1 et 2 comporte un arbre 1, en l'occurrence un arbre creux d'un diamètre relativement important par rapport aux dimensions radiales du moteur. L'arbre 1 est monté de façon rotative, au moyen de roulements à billes 2, 3, dans un ensemble de stator 4 formé de deux sous-ensembles comportant respectivement des pièces 41, 42 et 43, 44 réalisées par exemple en aluminium ou en une matière plastique.

Un premier disque annulaire 5, en un matériau aimantable tel que le samarium-cobalt, est monté par l'intermédiaire d'une pièce de support annulaire 6 sur la bague intérieure 7 du roulement à billes 2, cette bague étant solidaire de l'arbre 1. La bague extérieure 8 du roulement 2 est montée sur la pièce 41 du stator. Cette pièce 41 comporte des encoches dans le sens radial du moteur, dans lesquelles sont disposées des pièces 9, plates, en forme de « U », réalisées en un matériau de très bonne perméabilité magnétique. Une deuxième série de telles pièces en forme de « U », désignées par 10, est placée dans des encoches correspondantes de la pièce 42 du même sous-ensemble de stator. Les deux branches de chaque « U » constituent des parties polaires dont les extrémités libres présentent des surfaces polaires, les surfaces polaires d'une paire de pièces 9, 10 étant disposées en regard, de façon à former des entrefers 11, 12. Des bobines électriques annulaires, coaxiales 13, 14 sont disposées de façon à s'insérer dans l'espace formé entre les branches des « U », 9 et 10, respectivement. Chaque paire de pièces 9, 10 constitue un circuit magnétique élémentaire comportant deux entrefers et étant couplé avec les deux bobines 13 et 14.

Le disque annulaire 5 est aimanté en direction axiale, de façon à faire apparaître sur chacune de ses surfaces des pôles magnétiques de polarités alternantes, soit N et S, ces pôles étant répartis sensiblement régulièrement le long de deux zones annulaires concentriques 51, 52, indiqués sur la figure 2. Sur cette figure, les pôles N et S ont été montrés par des traits mixtes. Les dimensions de ces pôles sont sensiblement égales à celles des surfaces polaires formées par les extrémités des branches de « U » des pièces 9 et 10, les distances radiales des deux zones 51 et 52 correspondant aux distances radiales des entrefers 11 et 12 formés par les pièces 9 et 10.

Les pôles du disque annulaire aimanté étant répartis sensiblement régulièrement le long de chaque zone, l'espacement angulaire des lignes médianes des pôles est sensiblement de $\pi/N$ pour un nombre de pôles de $2N$ apparaissant dans chacune des zones 51 et 52 sur une même face du disque. L'espacement angulaire moyen des plans médians axiaux des circuits magnétiques élémentaires 10 est de $2\pi/N$. L'espacement effectif entre deux circuits voisins peut être légèrement différent de cette valeur moyenne, afin de compenser l'influence de certaines harmoniques du couple du moteur.

Les pôles magnétiques apparaissant aux surfaces polaires d'une pièce 9 ou 10 sous l'effet du courant dans les bobines 13 et 14, étant de noms différents d'un même côté du disque aimanté, les pôles magnétiques du disque aimanté situés sur une même face de ce disque et ayant la même ligne médiane sont également de noms différents. Autrement dit, les pôles de même nom se trouvant dans l'une et l'autre des deux zones concentriques 51 et 52, sur une même face du disque, sont décalés de π/N les uns par rapport aux autres, comme le montre la figure 2.

Le moteur de la figure 1 est un moteur à deux étages, le premier comportant le disque aimanté 5, et le deuxième, tout à fait similaire, un disque aimanté 15, ce dernier coopérant avec le sous-ensemble de stators comportant les pièces 43 et 44 mentionnées plus haut. La structure du deuxième étage est analogue à celle qui vient d'être décrite en rapport avec le premier. Chaque étage constitue, par exemple, une phase d'un moteur diphasé.

Il est à noter que la forme des circuits magnétiques élémentaires, telle que décrite ci-dessus, permet d'utiliser, pour un diamètre extérieur donné du moteur, un disque aimanté d'un diamètre maximal, et d'utiliser de larges zones aimantées sur ce disque. L'efficacité et le rendement atteignent, par conséquent, des valeurs très importantes pour un encombrement donné.

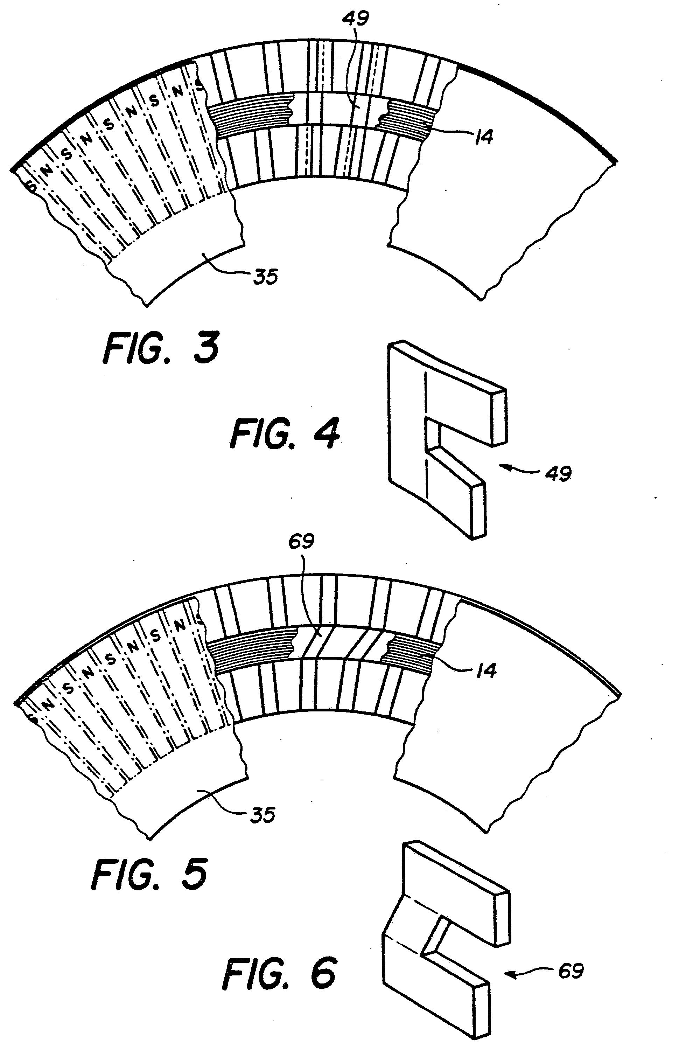

Les figures 3 et 4 d'une part, et 5 et 6 d'autre part, illustrent les variantes d'exécution du moteur de la figure 1, dans lesquelles les pôles apparaissant sur chaque face du disque aimanté 35 sont de même nom dans le même secteur angulaire du disque. Il est donc nécessaire de prévoir un décalage angulaire entre les parties polaires de chaque pièce en forme de « U », telle que 49 selon la figure 4, ou 69 selon la figure 6. Dans la forme d'exécution selon la figure 4, les deux parties polaires sont pliées à partir d'une portion de base droite, de façon à former un angle par rapport à celle-ci et entre elles, dans le sens radial. Selon la figure 6, les deux parties polaires sont parallèles entre elles, et c'est la portion de base de la pièce 69 qui est pliée, de façon à réaliser le décalage des deux parties polaires. Dans les deux cas, l'aimantation du disque 35 se trouve simplifiée du fait de l'alignement et de la continuité des pôles entre les deux zones annulaires coopérant avec les surfaces polaires des pièces en forme de « U ».

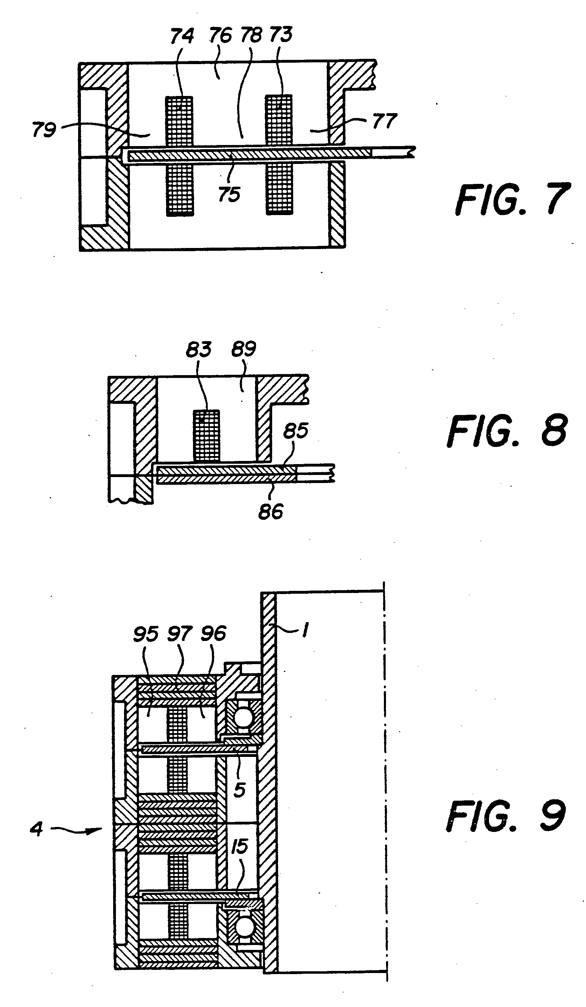

La figure 7 représente une autre forme d'exécution d'un circuit magnétique élémentaire, selon laquelle trois parties polaires, telles que 77, 78, 79, sont disposées de chaque côté d'un disque aimanté 75, ces trois parties polaires étant reliées entre elles par une portion de culasse commune 76. Deux bobines annulaires coaxiales 73, 74 sont couplées avec les pièces en forme de « W » ainsi formées de chaque côté du disque 75. Celui-ci présente trois zones aimantées annulaires concentriques sur chacune de ses faces, les pôles formés dans chaque secteur angulaire étant de même polarité dans les zones extérieure et intérieure, et étant de polarités opposées dans la zone du milieu, conformément à la succession des pôles apparaissant sur les surfaces polaires des parties 77, 78 et 79. Les bobines 73 et 74 sont, bien entendu, alimentées de façon que la même polarité apparaisse sur la pièce polaire commune 78.

L'avantage de la forme d'exécution de la figure 7 est une augmentation du couple du moteur par une augmentation relativement faible de la dimension radiale de celui-ci.

La figure 8 illustre une forme d'exécution visant à fournir un moteur particulièrement plat. Dans ce cas, les circuits magnétiques élémentaires sont formés par une seule pièce en forme de « U », 89, disposée de façon similaire à celle montrée à la figure 1 et couplée avec une bobine annulaire similaire 83, la fermeture du circuit étant réalisée par une partie de culasse disposée sur le côté opposé du disque aimanté 85. Dans l'exemple de la figure 8, cette partie de culasse 86 est solidaire du disque aimanté, mais elle pourrait également être fixe, et espacée du disque 85 comme la partie 10 de la figure 1.

Une forme d'exécution similaire à celle de la figure 1 est représentée à la figure 9, dans laquelle les mêmes éléments ont été désignés par les mêmes chiffres de référence que dans la figure 1. Dans cette forme d'exécution, les parties polaires des circuits magnétiques élémentaires, telles que 95, 96, sont reliées entre elles par une partie de culasse commune annulaire, réalisée par exemple par un ensemble feuilleté, tel que 97 dans la figure 9. Une telle forme d'exécution est particulièrement intéressante du point de vue de la fabrication des pièces et du montage du moteur.

**Revendications**

1. Moteur électrique synchrone comportant au moins une partie de rotor, essentiellement en forme de disque annulaire (5), aimanté de façon à présenter sur au moins une de ses faces planes opposées au moins une série de pôles magnétiques de polarités alternantes, disposés régulièrement le long d'au moins une zone annulaire (51), la partie de rotor étant montée de façon à être solidaire d'un arbre rotatif (1), moteur comportant en outre au moins un ensemble de plusieurs circuits magnétiques élémentaires (9) en un matériau magnétiquement perméable, au moins une bobine électrique de commande (13), annulaire, couplée avec ledit ensemble de circuits magnétiques, chacun de ces circuits présentant au moins un entrefer, et l'ensemble de ces entrefers étant disposé pour coopérer avec lesdits pôles magnétiques d'une zone annulaire de la partie de rotor, chacun des circuits magnétiques élémentaires comportant au moins deux parties polaires essentiellement plates, rectangulaires, disposées essentiellement radialement par rapport à l'arbre du moteur, caractérisé en ce que les deux parties polaires de chaque circuit magnétique (9) sont disposées à des distances radiales différentes, d'un même côté du disque aimanté (5), chaque circuit magnétique élémentaire présentant ainsi deux entrefers radialement espacés (11, 12) et coopérant avec deux zones annulaires concentriques du disque aimanté, et la bobine électrique de commande (13) étant disposée de façon à s'insérer dans l'espace formé entre les parties polaires des circuits magnétiques avec lesquels elle est couplée.

2. Moteur selon la revendication 1, comportant une partie de rotor aimantée axialement de façon à présenter sur chacune de ses faces planes au moins une série de pôles magnétiques, caractérisé en ce que chaque circuit magnétique élémentaire comporte quatre parties polaires, disposées deux par deux de part et d'autre du disque aimanté de façon à former deux entrefers à des distances radiales différentes, une bobine annulaire et une partie de culasse étant disposées de chaque côté du disque aimanté.

3. Moteur selon la revendication 1, caractérisé en ce qu'il comporte au moins trois parties polaires (77, 78, 79) disposées à des distances radiales différentes, d'un même côté du disque aimanté, reliées deux par deux par au moins une partie de culasse et couplées avec au moins deux bobines annulaires concentriques (73, 74), de diamètres différents, passant chacune entre deux parties polaires, ces parties polaires faisant partie d'au moins deux circuits magnétiques élémentaires coopérant avec les pôles magnétiques d'au moins trois zones annulaires concentriques du disque aimanté.

4. Moteur selon la revendication 3, comportant une partie de rotor aimantée axialement de façon à présenter sur chacune de ses faces planes au moins une série de pôles magnétiques, caractérisé en ce qu'il comporte des parties polaires disposées deux par deux de part et d'autre du disque aimanté, de façon à former un entrefer coopérant avec la zone annulaire correspondante du disque aimanté, lesdites parties de culasse et lesdites bobines annulaires étant disposées de chaque côté du disque aimanté.

5. Moteur selon l'une des revendications 1 ou 3, caractérisé en ce que chaque circuit magnétique élémentaire comporte, d'un côté du disque aimanté, une partie de fermeture du circuit, disposée en regard des parties polaires, de l'autre côté du disque aimanté.

6. Moteur selon la revendication 5, comportant une partie de rotor aimanté axialement de façon à présenter sur chacune de ses faces planes au moins une série de pôles magnétiques, caractérisé en ce que la partie de fermeture du circuit (86) est solidaire de la partie de rotor.

7. Moteur selon l'une des revendications précédentes, caractérisé en ce que les deux parties polaires d'un circuit magnétique élémentaire, disposées à des distances radiales différentes d'un même côté du disque aimanté, présentent un même plan de symétrie axiale, les pôles magnétiques de même nom, situés respectivement dans l'une et l'autre desdites zones annulaires concentriques du disque aimanté, étant décalés l'un par rapport à l'autre d'un angle sensiblement égal à π/N, si 2N est le nombre de pôles alternativement positifs et négatifs d'une zone annulaire.

8. Moteur selon l'une des revendications 1 à 6, caractérisé en ce que les deux parties polaires d'un circuit magnétique élémentaire, disposées à des distances radiales différentes d'un même côté du disque aimanté, présentent des plans de symétrie axiaux respectifs décalés d'un angle sensiblement égal à π/N, si 2N est le nombre de pôles alternativement positifs et négatifs d'une zone annulaire du disque aimanté, les pôles de même nom des zones annulaires concentriques étant sensiblement alignés radialement deux par deux.

9. Moteur selon l'une des revendications précédentes, caractérisé en ce que les parties de culasse sont formées par une partie annulaire commune aux parties polaires disposées d'un même côté du disque aimanté.

10. Moteur selon la revendication 8, caractérisé en ce que lesdites deux parties polaires et la partie de culasse correspondante sont constituées d'une pièce essentiellement plate, en forme de « U » (49), les deux branches du « U » formant les parties polaires étant pliées par rapport à la partie de culasse pour réaliser le décalage de leurs plans de symétrie.

11. Moteur selon la revendication 8, caractérisé en ce que lesdites deux parties polaires et la partie de culasse correspondante sont constituées d'une pièce essentiellement plate, en forme de « U » (69), la partie de culasse étant pliée de façon à réaliser le décalage des deux parties polaires formées par les branches du « U ».

**Claims**

1. Synchronous electric motor comprising at least one rotor part, substantially in the shape of an annular disc (5), magnetized so as to present on at least one of its opposite planar faces at least one series of magnetic poles of alternating polarities, disposed regularly along at least one annular zone (51), the rotor part being mounted so as to be integral with a rotating shaft (1), the motor comprising further at least one assembly of several elementary magnetic circuits (9) of a magnetically permeable material, and at least one annular electric energizing coil (13) coupled with said assembly of magnetic circuits, each of these circuits having at least one air-gap, and all of these air-gaps being arranged for co-operating with the said magnetic poles of an annular zone of the rotor part, each of the elementary circuits comprising at least two rectangular, substantially flat pole parts, arranged substantially radially with respect to the shaft of the rotor, characterized in that the two pole parts of each magnetic circuit (9) are arranged at different radial distances on a same side of the magnetized disc (5), each elementary magnetic circuit thus presenting two radially spaced air-gaps (11, 12) and co-operating with two concentric annular zones of the magnetized disc, and the electric energizing coil (13) being arranged so as to be inserted into the space formed between the pole parts of the magnetic circuits with which it is coupled.

2. Motor according to claim 1, comprising a rotor part magnetized axially so as to present at least one series of magnetic poles on each of its planar faces, characterized in that each elementary magnetic circuit comprises four pole parts, arranged in pairs on both sides of the magnetized disc so as to form two air-gaps at different radial distances, an annular coil and a yoke part being arranged on each side of the magnetized disc.

3. Motor according to claim 1, characterized in that it comprises at least three pole parts (77, 78, 79), arranged at different radial distances on a same side of the magnetized disc, connected in pairs by at least one yoke part and coupled with at least two concentric annular coils (73, 74) of different diameters which each pass between two pole parts, these pole parts forming part of at least two elementary magnetic circuits co-operating with the magnetic poles of at least three concentric annular zones of the magnetized disc.

4. Motor according to claim 3, comprising a rotor part magnetized axially so as to present, on each of its planar faces, at least one series of magnetic poles, characterized in that it comprises pole parts arranged in pairs on both sides of the magnetized disc, so as to form an air-gap co-operating with the corresponding annular zone of the magnetized disc, said yoke parts and said annular coils being arranged on both sides of the magnetized disc.

5. Motor according to one of claims 1 or 3, characterized in that each elementary magnetic circuit comprises on one side of the magnetized disc a circuit-closing part arranged opposite the pole parts on the other side of the magnetized disc.

6. Motor according to claim 5, comprising a rotor part axially magnetized so as to present on each of its planar faces at least one series of magnetic poles, characterized in that the circuit-closing part (86) is fast with the rotor part.

7. Motor according to one of the preceding claims, characterized in that the two pole parts of an elementary magnetic circuit, which are arranged at different radial distances on a same side of the magnetized disc, have a same plane of axial symmetry, the magnetic poles of same name, respectively situated in one and the other of said concentric annular zones of the magnetized disc, being shifted one with respect to the other by an angle substantially equal to $\pi/N$, if $2N$ is the number of alternatively positive and negative poles of an annular zone.

8. Motor according to one of the claims 1 to 6, characterized in that the two pole parts of an elementary magnetic circuit, arranged at different radial distances on a same side of the magnetized disc, have respective axial planes of symmetry shifted by an angle substantially equal to $\pi/N$, if $2N$ is the number of alternatively positive and negative poles of an annular zone of the magnetized disc, the poles of same name of the concentric annular zones being substantially radially aligned by pairs.

9. Motor according to one of the preceding claims, characterized in that the yoke parts are formed by an annular part common to the pole parts arranged on a same side of the magnetized disc.

10. Motor according to claim 8, characterized in that two pole parts and the corresponding yoke part are formed by a substantially flat piece in the shape of an « U » (49), the two legs of the « U » forming the pole parts being bent with respect to the yoke part for achieving the shifting of their planes of symmetry.

11. Motor according to claim 8, characterized in that said two pole parts and the corresponding yoke part are formed by a substantially flat piece in the shape of an « U » (69), the yoke part being bent so as to achieve the shifting of the two pole parts formed by the legs of the « U ».

## Patentansprüche

1. Elektrischer Synchron-Motor mit mindestens einem Rotorteil, im wesentlichen in Form einer ringförmigen Scheibe (5), die so magnetisiert ist, dass sie auf mindestens einer ihrer einander gegenüberliegenden ebenen Flächen mindestens eine Reihe von magnetischen Polen abwechselnder Polarität aufweist, die regelmässig entlang mindestens einer ringförmigen Zone (51) angeordnet sind, wobei der Rotorteil so eingebaut ist, dass er fest mit einer drehbaren Welle (1) verbunden ist, wobei der Motor ferner mindestens eine Zusammenstellung von mehreren elementaren Magnetkreisen (9) aus einem magnetisch permeablen Material, mindestens eine ringförmige elektrische Steuerspule (13), die mit der genannten Zusammenstellung von Magnetkreisen gekoppelt ist, wobei jeder dieser Kreise mindestens einen Luftspalt aufweist und die Gesamtheit dieser Luftspalte so angeordnet ist, dass sie mit den genannten Magnetpolen einer ringförmigen Zone des Rotorteils zusammenwirken, wobei die elementaren Magnetkreise mindestens zwei, im wesentlichen flache, rechteckige Polteile aufweisen, die im wesentlichen radial in Bezug auf die Motorwelle angeordnet sind, dadurch gekennzeichnet, dass die beiden Polteile jedes Magnetkreises (9) in verschiedenen radialen Abständen auf einer selben Seite der magnetisierten Scheibe (5) angeordnet sind, wobei jeder elementare Magnetkreis somit zwei in einem radialen Abstand voneinander befindliche Luftspalte (11, 12) aufweist und mit zwei konzentrischen ringförmigen Zonen der magnetisierten Scheibe zusammenwirkt, und wobei die elektrische Steuerspule (13) so angeordnet ist, dass sie sich in den Raum einfügt, der zwischen den Polteilen der Magnetkreise, mit denen sie gekoppelt ist, gebildet ist.

2. Motor nach Patentanspruch 1, mit einem Rotorteil, der so axial magnetisiert ist, dass er auf jeder seiner ebenen Flächen mindestens eine Reihe von Magnetpolen aufweist, dadurch gekennzeichnet, dass jeder elementare Magnetkreis vier Polteile aufweist, die paarweise zu beiden Seiten der magnetisierten Scheibe angeordnet sind, sodass sie zwei Luftspalte in verschiedenen radialen Abständen bilden, wobei eine ringförmige Spule und ein Jochteil zu beiden Seiten der magnetisierten Scheibe angeordnet sind.

3. Motor nach Patentanspruch 1, dadurch gekennzeichnet, dass er mindestens drei Polteile (77, 78, 79) aufweist, die in verschiedenen radialen Abständen auf einer selben Seite der magnetisierten Scheibe angeordnet sind, wobei sie paarweise durch mindestens ein Jochteil verbunden sind und mit mindestens zwei ringförmigen konzentrischen Spulen (73, 74) verschiedener Durchmesser gekoppelt sind, die jeweils zwischen zwei Polteilen durchgeführt sind, wobei diese Polteile zu mindestens zwei elementaren Magnetkreisen gehören, die mit den Magnetpolen von mindestens drei ringförmigen konzentrischen Zonen der magnetisierten Scheibe zusammenwirken.

4. Motor nach Patentanspruch 3 mit einem Rotorteil, der so axial magnetisiert ist, dass er auf jeder seiner ebenen Flächen mindestens eine Reihe von Magnetpolen aufweist, dadurch gekennzeichnet, dass er Polteile aufweist, die paarweise zu beiden Seiten der magnetisierten Scheibe angeordnet sind, sodass sie einen mit der entsprechenden ringförmigen Zone der magnetisierten Scheibe zusammenwirkenden Luftspalt bilden, wobei die genannten Jochteile und die ringförmigen Spulen zu beiden Seiten der magnetisierten Scheibe angeordnet sind.

5. Motor nach einem der Patentansprüche 1 oder 3, dadurch gekennzeichnet, dass jeder elementare Magnetkreis auf einer Seite der magnetisierten Scheibe einen den Kreis schliessenden Teil aufweist, der gegenüber den Polteilen auf der anderen Seite der magnetisierten Scheibe angeordnet ist.

6. Motor nach Patentanspruch 5 mit einem Rotorteil, der so axial magnetisiert ist, dass er auf jeder seiner ebenen Flächen mindestens eine Reihe von Magnetpolen aufweist, dadurch gekennzeichnet, dass der den Kreis schliessende Teil (86) fest mit dem Rotorteil verbunden ist.

7. Motor nach einem der vorhergehenden Patentansprüche, dadurch gekennzeichnet, dass die beiden Polteile eines elementaren Magnetkreises, die in verschiedenen radialen Abständen auf einer selben Seite der magnetisierten Scheibe angeordnet sind, eine gemeinsame axiale Symmetrie-Ebene besitzen, wobei die Magnetpole desselben Namens, die jeweils in der einen und der anderen der genannten ringförmigen konzentrischen Zonen der magnetisierten Scheibe liegen, gegeneinander um einen Winkel verschoben sind, der im wesentlichen gleich π/N ist, wenn 2N die Anzahl der abwechselnd positiven und negativen Pole einer ringförmigen Zone ist.

8. Motor nach einem der Patentansprüche 1 bis 6, dadurch gekennzeichnet, dass die beiden Polteile eines elementaren Magnetkreises, die in verschiedenen radialen Abständen auf einer selben Seite der magnetisierten Scheibe angeordnet sind, jeweils axiale Symmetrie-Ebenen aufweisen, die um einen Winkel verschoben sind, der im wesentlichen gleich π/N ist, wenn 2N die Anzahl der abwechselnd positiven und negativen Pole einer ringförmigen Zone der magnetisierten Scheibe ist, wobei die Pole gleichen Namens der konzentrischen ringförmigen Zonen jeweils paarweise im wesentlichen in Radialrichtung ausgerichtet sind.

9. Motor nach einem der vorhergehenden Patentansprüche, dadurch gekennzeichnet, dass die Jochteile durch ein ringförmiges Teil gebildet sind, das den auf einer selben Seite der magnetisierten Scheibe angeordneten Polteile gemeinsam ist.

10. Motor nach Patentanspruch 8, dadurch gekennzeichnet, dass die genannten zwei Polteile und der entsprechende Jochteil durch ein im wesentlichen flaches, « U »-förmiges Teil (49) gebildet werden, wobei die beiden Arme des « U », welche die Polteile bilden, gegenüber dem Jochteil abgebogen sind, um die Verschiebung ihrer Symmetrie-Ebenen zu erreichen.

11. Motor nach Patentanspruch 8, dadurch gekennzeichnet, dass dhie beiden Polteile und der entsprechende Jochteil durch ein im wesentlichen flaches, « U »-förmiges Teil (69) gebildet werden, wobei der Jochteil so gebogen ist, dass er die Verschiebung der zwei Polteile, die durch die Arme des « U » gebildet werden, bewirkt.

FIG. 1

FIG. 2

FIG. 3

FIG. 4

FIG. 5

FIG. 6

74 76 78 73

79

77

75

*FIG. 7*

83 89

85

86

*FIG. 8*

95 97 96

I

4

5

I5

*FIG. 9*